# EUROPEAN PATENT SPECIFICATION

(11) **EP 0 533 190 B1**
(45) Date of publication and mention of the grant of the patent: **10.04.1996**
(21) Application number: 92116015.6
(22) Date of filing: 18.09.1992
(51) Int. Cl.: G06F 12/10

(54) **Data processing system with address translation function for different page sizes**
Datenverarbeitungseinrichtung mit Adressübersetzung für verschiedene Seitengrössen
Système de traitement de données avec fonction de traduction d'adresse pour pages de tailles différentes

(30) Priority: 19.09.1991 JP 268328/91
(43) Date of publication of application: 24.03.1993
(73) Proprietor: NEC CORPORATION, Tokyo (JP)
(72) Inventor: Fujiwara, Yoshifumi, c/o NEC Corporation, Minato-ku, Tokyo (JP); Kato, Hiroshi, c/o NEC Koufu, Ltd., Koufu-shi, Yamanashi (JP)
(74) Representative: VOSSIUS & PARTNER

(56) References cited:
- EP-A- 0 373 780
- US-A- 3 938 100
- US-A- 4 376 297
- PATENT ABSTRACTS OF JAPAN vol. 11, no. 170 (P-581)2 June 1987 & JP-A-62 002 338 ( NEC ) 8 January 1987

## Description

The present invention relates to a data processing system and, more particularly, to a data processing system having address conversion tables accomodating a plurality of page sizes.

A conventional data processing system is disclosed in, for example, US-A-4,691,281. Said known data processing system has a logical address specifying register for writing, among a plurality of logical addresses stored in a logical address space, a preselected single logical address in each cycle associated with a preselected one of a plurality of data elements arranged in a particular order. A distance specifying register writes in each cycle a logical distance associated with a real distance which is arranged in a particular order. A request control circuit determines the number of elements in each cycle and in response to the logical distance based on the particular order. The logical addresses and part of the logical distance are applied to an address translation unit. In response, the address translation unit generates a plurality of consecutive real page addresses matching the preselected logical address. An address generator generates a predetermined number of local logical addresses in response to the logical distance and the preselected logical address. An address combination circuit combines the local logical addresses and the consecutive real page addresses to form local real addresses equal in number to the predetermined number. A memory access controller restricts the local real addresses in number to the element number. A memory can be accessed in each cycle by a plurality of real addresses calculated from the logical distance and the preselected logical address.

The conventional data processing system having the above construction has some problems left unsolved, as follows.

To begin with, the system assigns only a single page size to the logical addresses of the address space. Hence, dynamic address translation is not practicable when it comes to a virtual computer system which needs a plurality of page sizes.

The system supervises a memory on the basis of the single page size. It follows that when the data area is far greater than the program area on a main memory, substantial part of the main memory is simply wasted or the address translation table itself is large-size. This prevents the main memory from being efficiently used. US-A-4 376 297 discloses a virtual memory addressing device which corresponds to the precharacterizing part of the claim, thus with a translation look aside buffer (TLB) to hold a limited number of previously translated logical addresses. The TLB is divided into partitions corresponding to different address spaces. For each address space is indicated among others the size of the pages used.

It is therefore an object of the present invention to provide a data processing system capable of translating addresses having a plurality of page sizes dynamically to thereby enhance efficient use of a memory and improve the overhead of an operating system. This object is solved with the features of the claim.

A data processing system as described has a function of translating a logical address made up of a partial space number, a logical space number and an address within a page to a physical address made up of a physical page number and the address within a page and accesses a memory section under the coexistence of a plurality of page sizes. The system of the invention comprises a table holding section for holding a plurality of sets of copies of a plurality of address translation tables stored in the memory section on a partial space basis, the plurality of sets of copies being each assigned to a particular page size, a load control section for loading one of the plurality of address translation tables in the table holding section in response to an address translation table load command, a directory supervising section for supervising partial spaces each corresponding to one of the plurality of address translation tables held in the table holding section, and a first loading section for executing, by defining the partial spaces assigned to the same page size as a single supervisory unit in the directory supervising section, load control over the plurality of address translation tables independently.

The features and advantages of the present invention will become apparent from the following description when taken in conjunction with the accompanying drawings in which:
Fig 1 is a block diagram schematically showing a data processing system embodying the present invention;
Fig. 2 is a block diagram schematically showing a directory section included in the embodiment of Fig. 1;
Fig. 3 is a block diagram schematically showing a decision section also included in the embodiment shown in Fig. 2;
Fig. 4 is a block diagram schematically showing an address translation buffer shown in Fig. 1;
Fig. 5 shows a specific format of a logical address particular to the embodiment and assigned to a 128 KB/page size;
Fig. 6 shows a specific format of a logical address assigned to a 4 KB/page size;
Fig. 7 shows a specific format of control data included in an address translation table load command particular to the embodiment;
Fig. 8 shows a physical address associated with the 128 KB/page size;
Fig. 9 shows a physical address associated with the 4 KB/page size;
Fig. 10 indicates how a selector shown in Fig. 4 performs bit weighting in the case of the 128 KB/page size; and
Fig. 11 shows bit weighting to be performed in the case of the 4 KB/page size.

In the figures, the same reference numerals designate the same constituents.

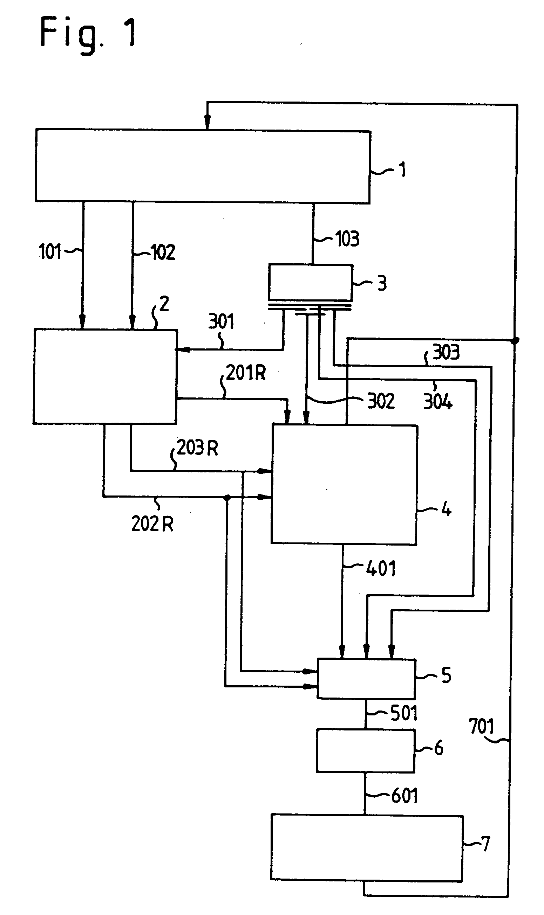

Referring to Fig. 1 of the drawings, a data processing system embodying the present invention is shown and generally made up of a command issuing section 1, a directory section 2, address registers 3 and 6, an address translation buffer 4, a selecting section 5, and a memory section 7.

First, how to load the address translation buffer 4 with an address translation table will be described on the assumption that two page sizes are available with the system.

As the command issuing section 1 issues an address translation table load command, it sends a request ATLRQ corresponding to the load command and control data to the directory section 2 via signal lines 101 and 102, respectively. At the same time, the command issuing section 1 delivers the leading address for reading the address translation table out of the memory section 7 to the address register 3 via a signal line 103. Specifically, the command issuing section 1 sends the leading address and successive addresses corresponding in number to pages via the signal line 103 while incrementing the address one by one.

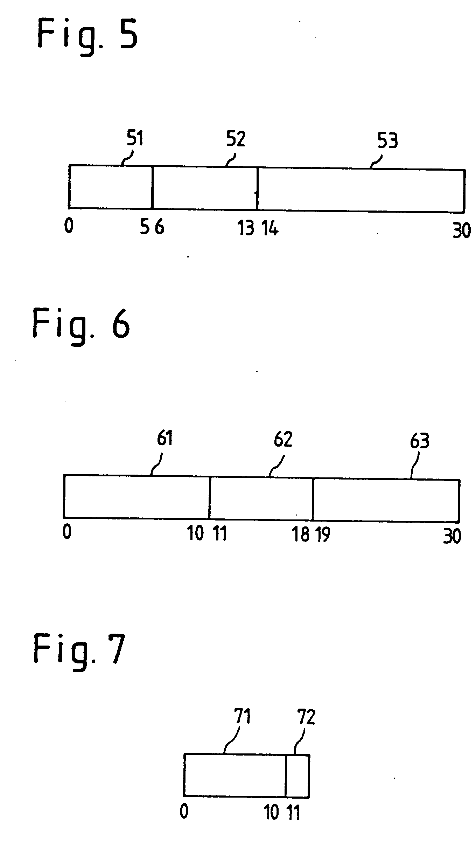

Figs. 5 and 6 show specific formats of logical addresses matching a 128 KB/page size and a 4 KB/page size, respectively. Both of the formats are assumed to have an address space of 2 GB.

Fig. 7 shows a specific format of control data included in the address translation table load command.

The address register 3 sends an address to the selecting section 5 over a signal line 304. When the directory section 2 receives the request ATLRQ via the signal line 101, it registers at directories on the basis of the control data received via the signal line 102.

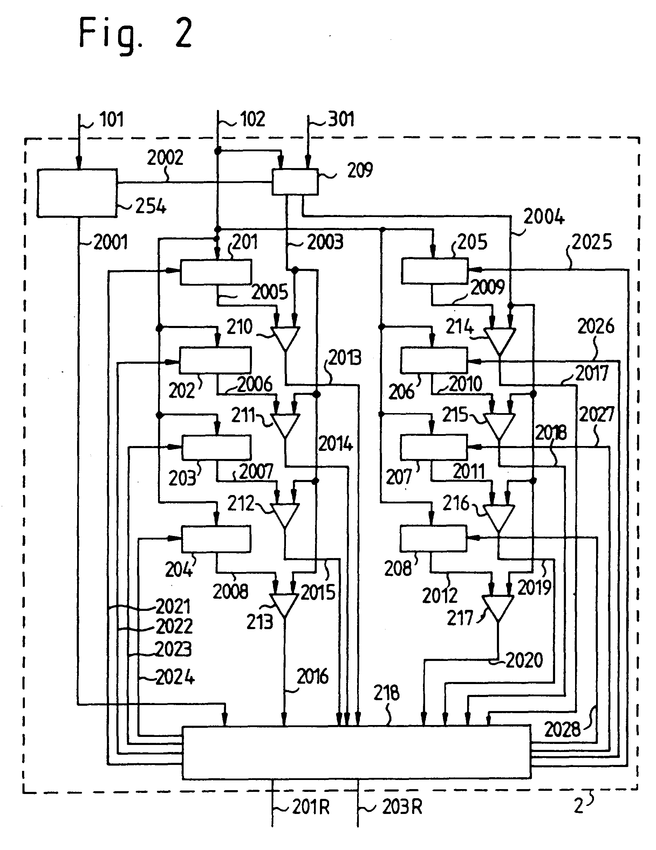

Specifically, as shown in FIG. 2, the directory section 2 has directories 201-208, a selector 209, comparators 210-217, a decision section 218, and a request control section 254.

The request control section 254 decodes the request received via the signal line 101. When the request control section 254 determines that the input request is the request ATLRQ corresponding to the address translation table load command, it delivers an ATLRQ signal to the decision section 218 and selector 209 over signal lines 2001 and 2002, respectively. The control data coming in over the signal line 102 is transferred to the selector 209 and directories 201-208.

Referencing the ATLRQ signal received via the signal line 2002, the selector 209 selects a partial space number out of the control data fed via the signal line 102. Then, the selector 209 sends, among the bits of the partial space number shown in Fig. 7, the fifth to tenth bits to the comparators 210-213 over a signal line 2003 while sending the zeroth to tenth bits to the comparators 214-217 over a signal line 2004.

The directories 201-204 and comparators 210-213 cooperate to hold a partial space number assigned to the 128 KB/page size while the directories 205-208 and comparators 214-217 cooperate to hold a partial space number assigned to the 4 KB/page size.

The comparator 210 compares the partial space number sent from the directory 201 via a signal line 2005 and the partial space number sent from the selector 209 via the signal line 2003 and sends the result of comparison to the decision section 218. Likewise, the comparators 211-213 compare respectively the partial space numbers sent from the directories 202-204 and the partial space number coming in over the signal line 2003, and each sends the result of comparison to the decision section 218.

The comparator 214 compares the partial space number sent from the directory 205 via a signal line 2009 and the partial space number sent from the selector 209 via the signal line 2004, while sending the result of comparison to the decision section 218. Likewise, the comparators 215-217 compare respectively the partial space numbers sent from the directories 206-208 and the partial space number coming in over the signal line 2004, and each sends the result of comparison to the decision section 218.

In response to the ATLRQ signal from the signal line 2001, the decision section 218 identifies the processing for loading the address translation table. The decision section 218 receives a page size specifying bit shown in FIG. 7 from the control data sent over the signal line 102 and the results of comparison sent from the comparators 210-217 via signal lines 2013-2020, thereby executing the processing.

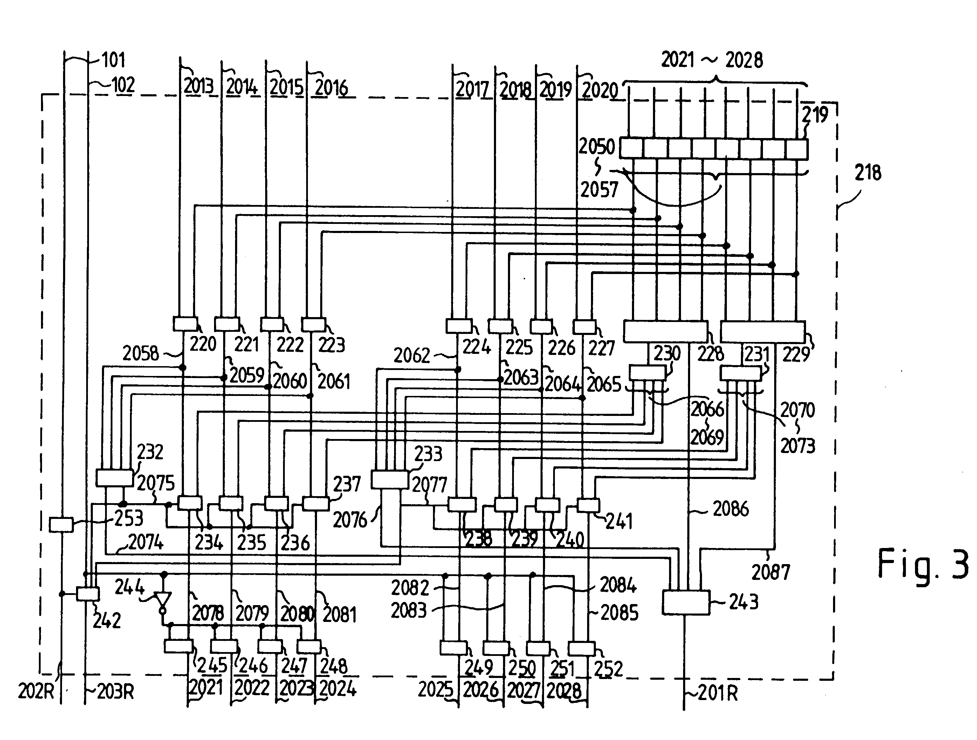

Referring to Fig. 3, the decision section 218 is made up of a V-bit register 219, AND gates 220-227 and 245-252, priority encoders 228 and 229, decoders 230-231 and 253, coincidence processing sections 232 and 233, selectors 234-243, and an inverter 244.

Assume that the page size specifying bit is (logical) "0". Then, the comparators 210-213, Fig. 2, each produces a coincidence signal. In response, the data stored in the V-bit register 219 are fed to the AND gates 220-223 via signal lines 2050-2053, respectively, and therefrom to the selectors 234-237 and coincidence processing section 232.

The coincidence processing section 232 ORs the outputs of the AND gates 220-223. If one or more of the outputs of the AND gates 220-223 is coincident, the processing section 232 commands all the selectors 234-237 to select the outputs of the AND gates 220-223 while delivering the results of encoding of the AND gates 220-223 to the selector 243 over a signal line 2074. If none of the outputs of the AND gates 220-223 is coincident, the priority encoder 228 encodes invalid ones of the bits of the V-bit register 219. The result of encoding is again decoded by the decoder 230 and then selected by the selectors 234-237. The AND gates 245-248 AND the signals selected by the selectors 234-237 and the inverted signal of the page size specifying signal received over the signal line 102. The resulting ANDs are sent to the directories 201-204, Fig. 2, via signal lines 2021-2024. In response, the directories 201-204 set partial space numbers and, therefore, the corresponding bits of the V-bit register 219.

When the coincidence processing section 232 does not detect any coincidence, the selector 243 selects the output received over the signal line 2074 and, if the output is not coincident, selects the output of the priority encoder 228. The output of the priority encocoder 228 is sent to the address translation buffer 4 via a signal line 201R as a write address.

Assume that the page size specifying bit is (logical) "1". The comparators 214-217, Fig. 2, each produces a coincidence signal. The data stored in tbe V-bit register 219 are applied to the AND gates 224-227 via signal lines 2054-2057 and therefrom to the selectors 238-241 and coincidence processing section 233.

Then, the coincidence processing section 233 ORs the outputs of the AND gates 224-227. If one or more of them is coincident, the processing section 233 commands all the selectors 238-241 to select the output results of the AND gates 224-227 and, at the same time, delivers the results of encoding of the AND gates 224-227 to the selector 243 over the signal line 2076. if none of the output results of the AND gates 224-227 is coincident. the priority encoder 229 encodes invalid ones of the bits of the V-bit register 219. The decoder 231 again decodes the results of decoding, and then the selectors 238-241 select them. The AND gates 249-252 AND the signals selected by the selectors 238-241 and the page size specifying signal sent over the signal line 102. The resulting ANDs are sent to the directories 205-208, Fig. 2, via the signal lines 2025-2028. In response, the directories 205-208 set partial space numbers and thereby the corresponding bits of the V-bit register 219.

When the decoder 253 determines that the request coming in over the signal line 101 is ATLRQ, the page size specifying signal entered via the signal line 102 is selected by the selector 242 and then transferred to the address translation buffer 4 via a signal line 203R.

As the decoder 253 determines that the request of interest is ATLRQ, it sends the request ATLRQ to the address translation buffer 4 over a signal line 202R as a load request meant for the buffer 4.

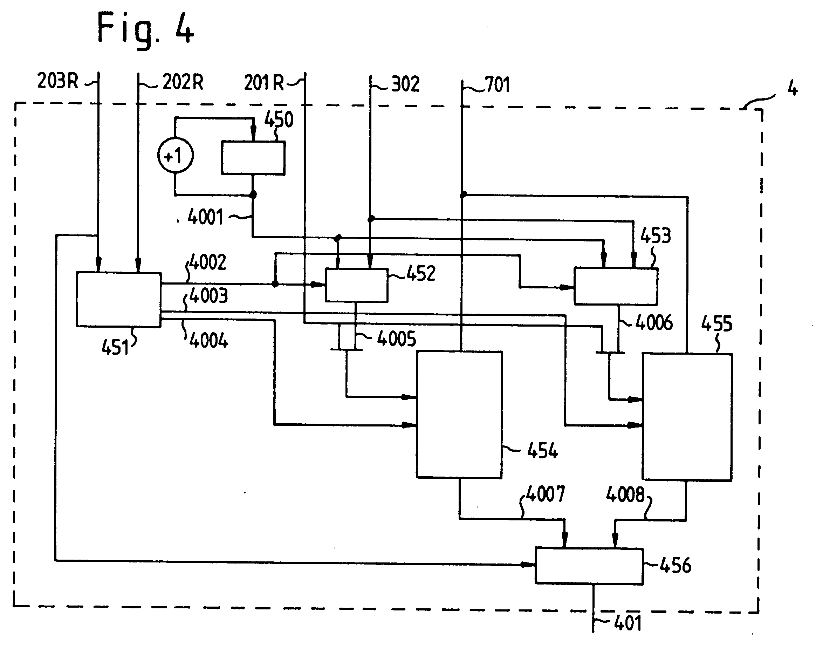

As shown in Fig. 4, the address translation buffer 4 is made up of an address counter register 450, a control section 451, selectors 452, 453 and 456, and buffers 454 and 455.

On receiving the signals over the signal lines 202R and 203R, the control section 451 delivers a write signal 4004 to the buffer 454 assigned to the 128 KB/page size or to the buffer 455 assigned to the 4 KB/page size. At the same time, the control section 451 sends a select signal to each of the selectors 452 and 453 to cause them to select the output of the address counter register 450.

On receiving the request ATLRQ via the signal line 202R, the control section 451 delivers a write command to the buffer 454 if the-page size specifying signal on the signal line 203R designates the 128 KB/page size or to the buffer 455 if it designates the 4 KB/page size.

In Fig. 1, the address selected by the selecting section 5 accesses the memory section 7 via the address register 6. As a result, data read out of the memory section 7 is transferred to the address translation buffer 4 via a signal line 701. Hence, data to be written to the buffer 454 or 455 is inputted via the signal line 701. Implemented as an 8-bit register, the address counter register 450 is provided with an adder incrementing by one at a time and is cleared at the same time as data is written to the buffer 454 or 455.

On receiving the write command via the signal lines 4004 and 4003, respectively, the buffers 454 and 455 write the data fed over the signal line 701 therein on the basis of the address coming in via the signal lines 201R and 4005 and the address coming in via the signal lines 201R and 4006. The address counter register 450 continuously counts up from the beginning to the end of the writing of data in the buffer 454 or 455.

A memory accessing operation particular to the illustrative embodiment will be described hereinafter.

Referring again to Fig. 1, when the command issuing section 1 issues a read request meant for the memory section 7, a memory access request (load request) and a read address are sent over the signal lines 101 and 103, respectively.

On receiving a 31-bit logical address over the signal line 103, the address register 3 sends the zeroth to eleventh bits of the logical address to the directory section 2 over a signal line 301, sends the sixth to eighteenth bits to the address translation buffer 4 over a signal line 302, and the fourteenth to thirtieth bits to the selecting section 5 over a signal line 303.

When the directory section 2 determines that the request received over the signal line 101 is a load request, it determines whether or not a coincident partial space number exists in any of the directories 201-208 on the basis of the address from the signal line 301.

As shown in Fig. 2, as the request control section 254 determines that the request from the signal line 101 is a load request, it sends a select signal to the selector 209 over the signal line 2002 to cause it to select the address from the signal line 301. The selector 209 feeds the zeroth to fifth bits of the logical address received over the signal line 301 to the comparators 210-213 via the signal line 2003 and feeds the zeroth to elcventh bits of the logical address to the comparators 214-217 via the signal line 2004. The comparators 210-213 determine whether or not the contents of the directories 201-204 and the address from the signal line 2003 are coincident, and then send the result of comparison to the decision section 218 via the signal lines 2013-2016. The comparators 214-217 determine whether or not the contents of the directories 205-208 and the address from the signal line 2004 are coincident, and then send the result of comparison to the decision section 218 via the signal lines 2017-2020.

In the decision section 218, the AND gates 220-227 AND the inputs from the signal lines 2013-2020 and the valid bits of the V-bit register 219. If the resulting ANDs are indicative of 128 KB/page size processing, the coincidence processing section 232 executes processing to thereby send the address of the coincident directory to the selector 243 via the signal line 2074. In the case of 4 KB/page size processing, the coincidence processing section 233 executes processing to send the address of the coincident directory to the selector 243 via the signal line 2076. The coincidence outputs of the processing sections 232 and 233 are delivered to the selector 242 over signal lines 2075 and 2077, respectively.

The selector 243 selects the address detected by the coincidence processing section 232 or 233 and sends it to the address conversion buffer 4 via the signal line 201R. The selector 242 sends "0" over the signal line if the coincidence processing section 232 has detected coincidence or sends "1" over the signal line 203R if the coincidence processing section 233 has detected coincidence, thereby reporting the address translation buffer 4 of the page size to access.

In Fig. 3, the control section 253 transfers the load request coming in over the line 101 to the address translation buffer 4 and selecting section 5 via the signal line 202R.

In Fig. 4, when the address translation buffer 4 determines that the request from the signal line 202R is a load request, it controls the selectors 452 and 453 to select the address from the signal line 302.

In response to the command from the signal line 4002, the selector 452 selects the sixth to thirteenth bits of the logical address fed over the signal line 302 and sends them to the buffer 454 over the signal line 4005. In response to the command from the signal line 4002, the selector 453 selects the eleventh to eighteenth bits of the logical address fed over the signal line 302 and sends then to the buffer 455 over the signal line 4006.

The buffer 454 is accessed on the basis of a buffer read address whose upper address and lower address are respectively implemented by the address of the directory received over the signal line 201R and the address of the page number portion received over the signal line 4005. As a result, the page number of a physical address is sent from the buffer 454 to the selector 456 via the signal line 4007. Likewise, the buffer 455 is accessed on the basis of a buffer read address whose upper address and lower address are respectively implemented by the address of the directory received over the signal line 201R and the address of the page number portion received over the signal line 4006. Then, the page number of a physical address is sent from the buffer 455 to the selector 456 via a signal line 4008.

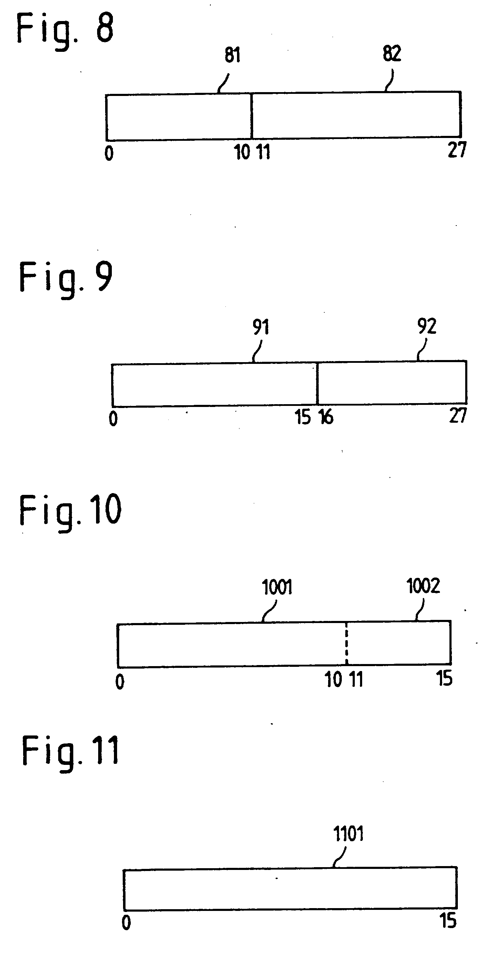

The selector 456 selects the page number address from the signal line 4007 if the page size specifying signal received over the signal line 203R is indicative of the 128 KB/page size or selects the page number address from the signal line 4008 if it is indicative of the 4 KB/page size. Then, the selector 456 weights the bits of the page number address in a manner shown in Fig. 10 or 11 and sends the weighted address to the selecting section 5 over the signal line 401.

Specifically, in the case of the 128 KB/page size, the selector 456 allocates eleven bits to the page number address from the left and allocates five bits of "0" to the right-hand side, as shown in Fig. 10. In the case of the 4 KB/page size, the selector 456 maintains the sixteen bits of the page number address as they are.

In response to the request from the signal line 202R (in this case, not including the ATLRQ signal), the selecting section 5 selects the page number from the signal line 401 and the address within the page from the signal line 303 and sends it to the address register 6.

If the request is not ATLRQ, the selecting section 5 executes processing on the basis of the page size specifying signal from the signal line 203R. Specifically, in the case of 128 KB/page size, the selecting section 5 generates a physical address whose upper address and lower address are respectively comprised of the eleven bits on the left-hand side of the 16-bit address received over the signal line 401 and the fourteenth to thirtieth bits of the logical address received over the signal line 303 (see Figs. 5 and 8), and then sends it to the address register 6. On the other hand, in the case of 4 KB/page size, the selector 5 generates a physical addressing section whose upper address and lower address are respectively comprised of the entire 16-bit address received over the signal line 401 and the nineteentb to thirtieth bits of the logical address received over the signal line 303 (see Figs. 6 and 9), and then sends it to the address register 6.

The address register 6 sends the physical address received over a signal line 501 to the memory section 7 and sends the load data received from the memory section 7 via the signal line 701 to the command issuing section 1, and then ends the processing.

Assume that the directories 201, 202 and 205 store respectively partial space numbers "03(M)", "07(M)" and "011(M)" (the address conversion buffer 4 is loaded with such three-partial spaces), and that the partial space "03(M)" is to be loaded. The suffix (M) and a suffix (B) which will appear later are representative of a hexadecimal number and a binary number, respectively. In this condition, the system executes the following procedure.

To begin with, the command issuing section 1 issues a load request ATLRQ to the directory section 2 via the signal line 101 and, at the same time, sends control information "006 (M)" to the directory section 2 via the signal line 102. Subsequently, the command issuing section 1 sends a load address to the address register 3 via the signal line 103 for reading the translation table out of the mcmory section 7.

On determining that the request from the signal line 101 is a load request ATLRQ, the directory section 2 sends a request ATLRQ to the address translation buffer 4 and selecting section 5 over the signal line 202R. Further, the directory section 2 delivers a page size specifying bit "0" corresponding to the 128 KB/page size to the address conversion buffer 4 and selecting section 5 over the signal line 203R, as instructed by the control data from the signal line 102. The directory section 2 identifies the partial space number "03(M)" on the basis of the control data "006(M)" received over the signal line 102, and then sends it to the comparators 210-213 via the selector 209. The comparators 210-213 compare the partial space number "03(M)" with the contents of the directories 201-204, respectively. Specifically, the comparator 210 compares the partial space number "03 (M)" corresponding to the control data with the partial space number "03 (M)" of the directory 201 and, if the former is identical with the latter, sends "1" to the decision section 218 ovcr the signal line 2013. Likewise, the other comparators 211-213 compare the partial space number "03 (M)" corresponding to the control data with the contents of the associated directories 202-204; since the former is not identical with the latter, the comparators 211-213 send "0" to the decision section 218 over the signal lines 2014-2016, respectively.

The decision section 218 inputs the results of comparison received over the signal lines 2013-2016 and the V-bit data "11001000 (B)" of the V-bit register 219 to the AND gates 220-223, respectively, thereby ANDing them. At this instant, the decision section 218 sends "1" over the signal line 2053 and "0" over the signal lines 2054-2056 to cause the coincidence processing section 232 to identify the coincidence, while sending "00 (B)" to the selector 243. The output of the selector 243 is sent to the address conversion buffer 4 via the signal line 201R. Assuming that the directory 201 or 205, the directory 202 or 206, the directory 203 or 207 or the directory 204 or 208 is coincident, then the address "00 (B)", "01 (B)", "10 (B)" or "11 (B)" is sent to the selector 243 via the signal line 2074 or 2076.

Assume that the coincidence processing section 232 does not detect coincidence on the basis of the outputs of the comparators 210-213 and AND gates 220-223. Then. V-bit data of the V-bit register 219 are inputted to the priority encoder 228 via the signal lines 2050-2053 as "1", "1", "0" and "0". The priority encoder 228 selects, among the directories having "0" at the "V" bit, one whose number is smallest, i.e., the directory 203 in this case and delivers the address "10 (B)" to the selector 243 via a signal line 2086.

The results of comparison fed to the coincidence processing section 232 are selected by the selectors 234-237 with the result that the processing section 232 produces set signals "1", "0", "0" and "0" corresponding to the directories 201-204. By the set signals on the signal lines 2021-2024, the directory 201 is enabled to set the partial space number "03 (M)" therein.

The address of the address register 3 is sent to the selecting section 5 via the signal line 304, selected on the basis of the command on the signal line 202R, and sent to the memory section 7 via the address register 6. The mcmory section 7 reads out address translation data on the basis of the address of the address register 6 and sends it to the address translation buffer 4 over the signal line 701. As the memory section 7 sends the address translation data, the address translation buffer 4 resets the address counter register 450.

The control section 451 sends a write enable signal to the buffer 454 via the signal line 4004 in response to the load request ATLRQ on the signal line 202R and the page size specifying signal "0" on the signal line 203R. Subsequently, the control section 451 generates an address "000 (M)" whose upper address and lower address are respectively comprised of the address "00 (B)" from the signal line 201R and the address "00000000 (B)" of the address counter register 450 selected by the selector 452 and sends it to the buffer 454 as a start address. As a result, the address translation data from the signal line 701 is written to the buffer 454. Here, the write address of the buffer 454 changes from "000 (M)" to "OFF (M)".

A load command to the memory section 7 which is based on a logical address "011A00F0 (M)" will be described hereinafter, assuming the above-described states of the directories.

The command issuing section 1 issues a load request to the directory section 2 via the signal line 101 while setting the logical address "011A00F0 (M)" in the address register 3 via the signal line 103.

In response, the address register 3 sends the upper eleven bits "011 (M)" over the signal line 301, "11A0 (M)" over the signal line 302, and "000F0 (M)" over the signai line 303.

On receiving the load request from the command issuing section 1, the directory section 2 selects the address "011 (M)" on the signal line 301 by the selector 209. At this instant, the upper six bits "02 (M)" of the address are sent over the signal line 2303 while the address "011 (M)" is sent over the signal line 2004. These are compared with the directories 201-208 by the comparators 210-217.

The comparator 214 determines that "011 (M)" of the directory 205 and "011 (M)" on the signal line 2004 are identical, and then informs the decision section 218 of the coincidence via the signal line 2017. Hence, the outputs of the comparators 210-217 reported over the signal lines 2013-2020 are "0", "0", "0", "0", "1", "1", "0" and "0", respectively.

On receiving the signals over the signal line 2013-2020, the decision section 218 ANDs the signals and the V-bit data of the V-bit register 219 by the AND gates 220-227. As a result, "0" is sent to the coincidence processing section 232 over each of the signal lines 2058-2061. "1", "0", "0", and "0" are sent to the coincidence processing section 233 over the signal lines 2062-2065, respectively.

The coincidence processing section 232 determines that none of the directories 201-204 is coincident and sends "0" to the signal line 2075.

The coincidence processing section 233 determines that thc directory 205 is coincident and the directories 206-208 are not coincident and sends a coincidence signal "1" over the signal line 2077 while sending "000 (B)", i.e., the address of the directory 205 over the signal line 2076.

The selector 242 determines, based on the coincidence signal on the signal line 2077, that the address is associated with the 4 KB/page size and sends "1" to the address translation buffer 4 via-the signal line 203R. The selector 243 selects the address "00 (B)" received over the signal line 2076 and transfers it to the address translation buffer 4 over the signal line 201R.

In response to the load request on the signal line 202R and the page size specifying signal on the signal line 203R, the control section 451 determines that the access is associated with the 4 KB/page size and causes the selectors 452 and 453 to select the address on the signal line 302 via the signal line 4002.

The selector 452 sends "8D (M)" included in the address "11A0 (M)" on the signal line 302 and corresponding to the page number associated with the 128 KB/page size as lower eight bits of a read address for accessing the buffer 454.

The selector 452 separates "8D (M)" included in the address "11A0 (M)" on the signal line 302 and corresponding to the page number associated with the 128 KB/page size and sends it as lower eight bits of a read address meant for the buffer 454. Likewise, the selector 453 selects "A0 (M)" included in the address "11A0 (M)" on the signal line 302 and corresponding to the page number associated with the 4 KB/page size and outputs it as lower eight bits of a read address meant for the buffer 455.

The buffer 454 reads out a physical page number by address translation on the basis of a 10-bit rcad address "08D(M)" produced from the address "00 (B)" on the signal line 201R and the address "8D (M)" fed from the selector 452. Let the address translation data *of* the buffer 454 associated with the read address "08D (M)" be "0B0 (M)". Likewise, the buffer 455 reads a physical page number by address translation on the basis of a 10-bit read address "0A0 (M)" produced from the address "00 (B)" on the signal line 201R and the address "A0 (M)" fed from the selector 453. Let the address translation data of the buffer 455 corresponding to the read address "0A0 (M)" be "101B (M)".

The selector 456 selects the address translation data "101B (M)" read out of the buffer 455 and sends it to the selecting section 5 via the signal line 401 in order to execute address translation assigned to the 4 KB/page size on the basis of the page size specifying signal "1" on the signal line 203R.

The selecting section 5 selects the physical page number "101B (M) ", i.e., data read out of the address translation buffer 4 and received over the signal line 401 and "0F0 (M)" included in the address within the page, associated with the 4 KB/page size and received over the signal line 303. As a result, "101B0F0 (M)" is set in the address register 6 as a physical address and sent to the memory section 7.

The memory section 7 reads out data on the basis of the physical address from the address register 6, sends load data to the command issuing section 1 via the signal line 702, and then ends the processing.

As stated above, the illustrative embodiment supervises addresses of a pluality of pages sizes independently of each another and, therefore, executes address translation with each of the page sizes dynamically.

Moreover, since the embodiment selects a particular page size matching the amount of data, it enhances the effective use of a limited memory space and the efficient use of the memory.

## Claims

1. A data processing system having a function of translating a logical address made up of an address space number (51,61), a logical page number (52,62) and an address (53,63) within a page to a physical address made up of a physical page number (81,91) and said address (53,63) within a page to access a memory (7), which is divided into a plurality of address spaces, to each address space being associated an address translation table using a particular page size, said system comprising:
table holding means (4,454,455) for holding copies of said address translation tables stored in the memory, to each holding means may be assigned a single address space;
directory registers (2,201-208) storing address space numbers, each register corresponding to a particular table holding means;
load control means (254,451) for loading an address space number into said directory register (201-208) and for loading a copy of the associated address translation table into said corresponding table holding means in response to an address translation table load command;
coincidence detecting means (210-217) connected to said directory registers for determining whether or not any of said address space numbers held in said directory registers and the address space number of a logical address for accessing the memory are coincident;
identifier generation control means (218,232,233,228,229,243) for controlling the generation of an identifier (201R) in response to a result of detection from said coincidence detecting means, to identify the holding means corresponding to the directory register which stores the coincident address space number; and
selecting means (456,4005,4006) to select the corresponding holding means in response to said identifier (201R),
characterized in that
said table holding means (4) is divided into groups (454;455), each group being arranged for handling a particular page size;
said directory registers (2) are divided into sets (201-204; 205-208), each set corresponding to a particular group of table holding means;
said load control means (254,451) loads a particular table holding means of a group and one register of the corresponding set of directory registers on the basis of the page size in said load command;
said identifier generation control means providing, upon detection of any coincidence in a particular set of said directory registers a group indication signal (203R); and
said selecting means (456,4005,4006) selects, in response to said indication signal (203R) and to said identifier (201R) the address table holding means of the corresponding group.

## Patentansprüche

1. Datenverarbeitungssystem mit einer Funktion zum Umsetzen einer aus einer Adreßraumzahl (51, 61), einer logischen Seitenzahl (52, 62) und einer Adresse (53, 63) innerhalb einer Seite bestehenden logischen Adresse in eine aus einer physikalischen Seitenzahl (81, 91) und der Adresse (53, 63) innerhalb einer Seite bestehenden physikalischen Adresse, um auf einen in mehrere Adreßräume unterteilten Speicher (7) zuzugreifen, wobei jedem Adreßraum eine Adreßumsetztabelle zugewiesen ist, die eine spezielle Seitengröße verwendet, wobei das System aufweist:
Tabellenhalteeinrichtungen (4, 454, 455) zum Halten von Kopien der in dem Speicher gespeicherten Adreßumsetztabellen, wobei jeder Halteeinrichtung ein einzelner Adreßraum zugewiesen sein kann;
Adreßraumzahlen speichernde Verzeichnisregister (2, 201-208), wobei jedes Register einer speziellen Tabellenhalteeinrichtung entspricht;
eine Ladesteuereinrichtung (254, 451) zum Laden einer Adreßraumzahl in das Verzeichnisregister (201-208) und zum Laden einer Kopie der zugewiesenen Adreßumsetztabelle in die entsprechende Tabellenhalteeinrichtung als Reaktion auf einen Adreßumsetztabellen-Ladebefehl;
eine mit den Verzeichnisregistern verbundene Koinzidenzdetektionseinrichtung (210-217) zum Bestimmen, ob eine der in den Verzeichnisregistern gehaltenen Adreßraumzahlen und die Adreßraumzahl einer logischen Adresse zum Zugreifen auf den Speicher koinzident sind;
eine Kennungserzeugungs-Steuereinrichtung (218, 232, 233, 228, 229, 243) zum Steuern der Erzeugung einer Kennung (201R) als Reaktion auf ein Detektionsergebnis von der Koinzidenzdetektionseinrichtung, um die Halteeinrichtung entsprechend dem Verzeichnisregister zu identifizieren, das die koinzidente Adreßraumzahl speichert; und
eine Auswahleinrichtung (456, 4005, 4006), um die entsprechende Halteeinrichtung als Reaktion auf die Kennung (201R) auszuwählen,
dadurch gekennzeichnet, daß
die Tabellenhalteeinrichtungen (4) in Gruppen (454; 455) unterteilt sind, wobei jede Gruppe zum Handhaben einer speziellen Seitengröße angeordnet ist;
die Verzeichnisregister (2) in Sätze (201-204; 205-208) unterteilt sind, wobei jeder Satz einer speziellen Gruppe von Tabellenhalteeinrichtungen entspricht;
die Ladesteuereinrichtung (254, 451) eine spezielle Tabellenhalteeinrichtung einer Gruppe und ein Register des entsprechenden Satzes von Verzeichnisregistern auf der Grundlage der Seitengröße in dem Ladebefehl lädt;
die Kennungserzeugungs-Steuereinrichtung nach Detektion einer Koinzidenz in einem speziellen Satz der Verzeichnisregister ein Gruppenanzeigesignal (203R) liefert; und
die Auswahleinrichtung (456, 4005, 4006) als Reaktion auf das Anzeigesignal (203R) und auf die Kennung (201R) die Adreßtabellenhalteeinrichtung der entsprechenden Gruppe auswählt.

## Revendications

1. Système de traitement de données ayant une fonction de traduction d'une adresse logique constituée d'un numéro d'espace d'adressage (51, 61), d'un numéro de page logique (52, 62) et d'une adresse (53, 63) dans une page en une adresse physique constituée d'un numéro de page physique (81, 91) et de ladite adresse (53, 63) dans une page pour accéder à une mémoire (7), qui est divisée en une pluralité d'espaces d'adressage, une table de traduction d'adresses utilisant une taille de page particulière étant associée à chaque espace d'adressage, ledit système comprenant :
- des moyens de retenue de tables (4, 454, 455) pour retenir des copies desdites tables de traduction d'adresses mémorisées dans la mémoire, un espace d'adressage unique pouvant être assigné à chaque moyen de retenue;
- des registres de répertoires (2, 201-208) mémorisant des numéros d'espace d'adressage, chaque registre correspondant à un moyen de retenue de table particulier;
- des moyens de commande de chargement (254, 451) pour charger un numéro d'espace d'adressage dans ledit registre de répertoire (201-208) et pour charger une copie de la table de traduction d'adresses associée dans ledit moyen de retenue de table correspondant en réponse à une instruction de chargement de table de traduction d'adresses;
- des moyens de détection de coïncidence (210-217) connectés auxdits registres de répertoires pour déterminer si l'un quelconque desdits numéros d'espace d'adressage retenus dans lesdits registres de répertoires et le numéro d'espace d'adressage de l'adresse logique pour accéder à la mémoire coïncident ou non;
- des moyens de commande de génération d'identificateur (218, 232, 233, 228, 229, 243) pour commander la génération d'un identificateur (201R) en réponse à un résultat de détection provenant desdits moyens de détection de coïncidence, pour identifier le moyen de retenue correspondant au registre de répertoire qui mémorise le numéro d'espace d'adressage coïncidant; et
- des moyens de sélection (456, 4005, 4006) pour sélectionner le moyen de retenue correspondant en réponse audit identificateur (201R),
caractérisé en ce que :
- lesdits moyens de retenue de tables (4) sont divisés en groupes (454; 455), chaque groupe étant disposé de manière à gérer une taille de page particulière;
- lesdits registres de répertoires (2) sont divisés en ensembles (201-204; 205-208), chaque ensemble correspondant à un groupe particulier des moyens de retenue de tables;
- lesdits moyens de commande de chargement (254, 451) chargent un moyen de retenue de table particulier d'un groupe et un registre de l'ensemble correspondant de registres de répertoires sur la base de la taille de page dans ladite instruction de chargement;
- lesdits moyens de commande de génération d'identificateur fournissant, lors de la détection d'une coïncidence quelconque dans un ensemble particulier desdits registres de répertoires, un signal d'indication de groupe (203R); et
- lesdits moyens de sélection (456, 4005, 4006) sélectionnent, en réponse audit signal d'indication (203R) et audit identificateur (201R), le moyen de retenue de table d'adresses du groupe correspondant.
